# FASCICULE DE BREVET EUROPEEN

(11) **EP 4 376 169 B1**
(45) Date de publication et mention de la délivrance du brevet: **28.01.2026**
(21) Numéro de dépôt: 22306740.6
(22) Date de dépôt: 25.11.2022
(51) Int. Cl.: H01M 10/613, H01M 10/658, H01M 10/653, H01M 10/625, H01M 10/647, H01M 50/209, H01M 50/224, H01M 50/249, H01M 50/291, H01M 50/293

(54) **ENSEMBLE COMPRENANT UNE PLURALITÉ DE CELLULES ÉLECTROCHIMIQUES ET DISPOSITIF ÉLECTRIQUE COMPRENANT UN TEL ENSEMBLE**
ANORDNUNG MIT EINER VIELZAHL VON ELEKTROCHEMISCHEN ZELLEN UND ELEKTRISCHE VORRICHTUNG MIT EINER SOLCHEN ANORDNUNG
ASSEMBLY COMPRISING A PLURALITY OF ELECTROCHEMICAL CELLS AND ELECTRICAL DEVICE COMPRISING SUCH AN ASSEMBLY

(43) Date de publication de la demande: 29.05.2024
(73) Titulaire: Automotive Cells Company SE, 33520 Bruges (FR)
(72) Inventeur: ORIGUCHI, Masato, 92300 LEVALLOIS PERRET (FR); MORIN, Christophe, 92300 LEVALLOIS PERRET (FR)
(74) Mandataire: Lavoix

(56) Documents cités:
- EP-A1- 3 264 519
- WO-A1-2019/028511
- CN-U- 212 625 867
- US-A1- 2021 143 383
- US-A1- 2021 257 690
- US-A1- 2022 006 138

## Description

La présente invention concerne un assemblage comprenant une pluralité de cellules électrochimiques.

L'invention s'applique en particulier à la fabrication d'une batterie, notamment pour un véhicule électrique ou hybride. On entend par « batterie » une pluralité de cellules électrochimiques reliées électriquement les unes aux autres. Selon un exemple particulier de batterie, la pluralité de cellules électrochimiques est agencée sous la forme d'un ou plusieurs module(s), chaque module comprenant plusieurs cellules électrochimiques raccordées électriquement les unes aux autres et assemblées mécaniquement les unes aux autres par un système d'assemblage, tel que des plaques d'assemblage. Une cellule électrochimique comprend, en particulier, un empilement, connu sous le terme de « stack », d'électrodes positives et d'électrodes négatives disposées en alternance, un séparateur étant disposé entre les électrodes positives et négatives. Les électrodes positives reliées les unes aux autres forment une borne positive, et les électrodes négatives reliées les unes aux autres forment une borne négative.

Afin d'éviter ou de retarder une propagation d'un emballement thermique entre les cellules électrochimiques, il est bien connu d'installer des couches isolantes entre les cellules électrochimiques. Ces couches sont par exemple constituées d'un matériau thermiquement isolant.

Par exemple, EP 3 432 411 décrit un assemblage comprenant un empilement de cellules électrochimiques, l'assemblage comprenant en outre des couches isolantes comprenant un aérogel et disposées entre deux cellules adjacentes afin de limiter la propagation de chaleur en cas d'emballement thermique d'une cellule.

Cependant, une telle solution ne donne pas entière satisfaction. En effet, pour atteindre une efficacité suffisante dans la prévention de la propagation de l'emballement thermique entre les cellules électrochimiques en tout point de la batterie, des couches à haute résistance thermique coûteuses sont nécessaires. Ceci conduit à une augmentation du coût de la batterie.

De plus, le système d'assemblage mécanique de la batterie est généralement fabriqué dans un matériau présentant une haute conductivité thermique, par exemple en métal, notamment en aluminium. Le système d'assemblage mécanique est alors susceptible de faciliter les transferts de chaleur entre les cellules et de permettre la propagation de l'emballement thermique.

EP 3 264 519 A1, US 2022/006138 A1, CN 212625867 U, US 2021/257690 A1 et WO 2019/028511 A1 décrivent des assemblages comprenant un empilement de cellules électrochimiques et un boitier recevant ledit empilement.

Un but de l'invention est donc de fournir une solution empêchant la propagation de l'emballement thermique dans un dispositif électrique de manière efficace et économique.

A cet effet, l'invention a pour objet un assemblage selon la revendication 1.

Ainsi, en cas d'emballement thermique d'une cellule électrochimique, les moyens intumescents se mettent à gonfler sous l'effet de la chaleur, entrainant la rupture du boitier au niveau de la ou des partie(s) frangible(s). Cela évite ou retarde une propagation de l'emballement thermique à d'autres cellules électrochimiques et prévient efficacement l'emballement thermique dans le dispositif électrique. Cette solution est également peu coûteuse à mettre en place et évite d'avoir à utiliser des matériaux isolants thermiques coûteux dans les couches isolantes.

Selon des modes particuliers de réalisation, l'assemblage est selon l'une quelconque des revendications 2 à 14.

L'invention a aussi pour objet un dispositif électrique selon la revendication 15.

L'invention sera mieux comprise à la lecture de la description qui va suivre, donnée uniquement à titre d'exemple et faite en se référant aux dessins annexés, sur lesquels :
- la figure 1 est une vue éclatée en perspective d'un dispositif électrique comprenant un assemblage selon l'invention,
- la figure 2 est une vue schématique de côté d'une partie de l'assemblage de la figure 1.

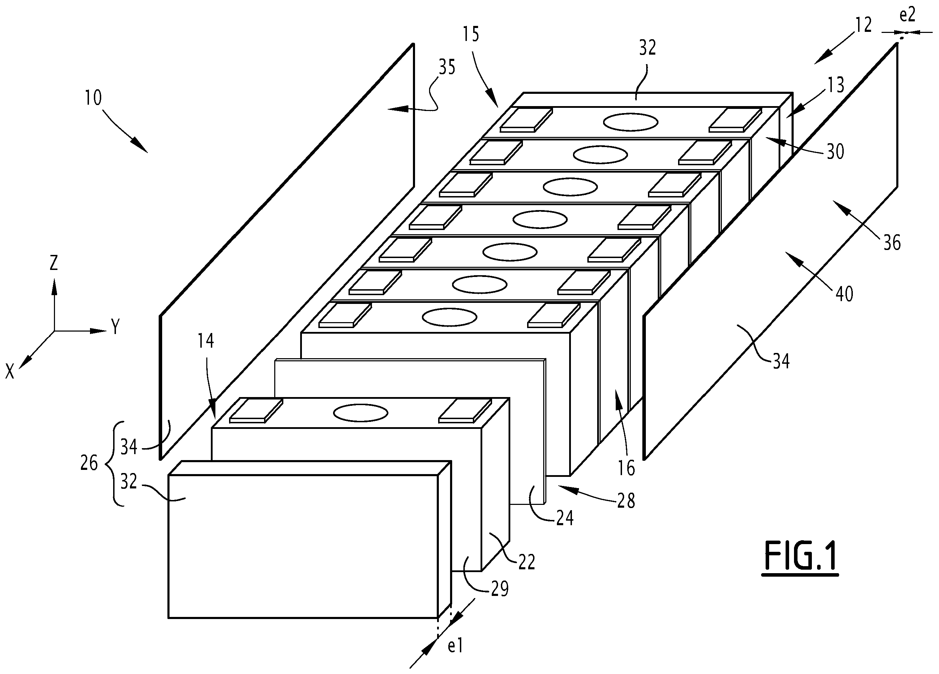

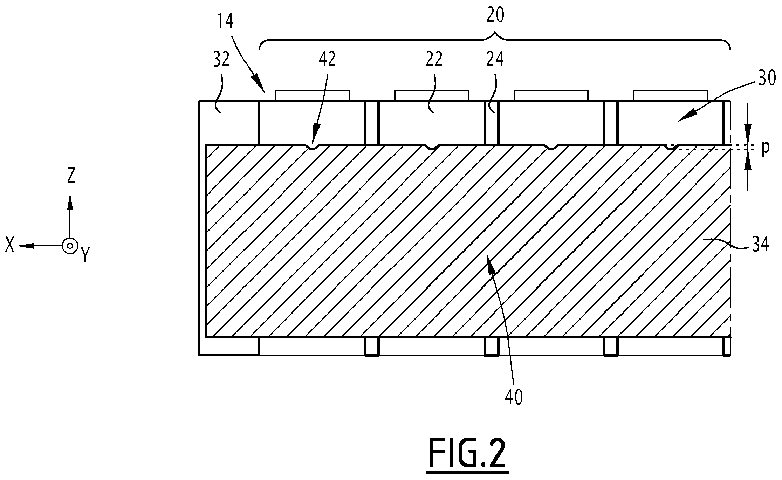

Les figures 1 et 2 représentent un dispositif électrique 10 selon un premier mode de réalisation de l'invention.

Le dispositif électrique 10 n'est que partiellement représenté sur la figure 1 et est par exemple une batterie ou un module de batterie destiné à être assemblé avec d'autres modules afin de former un pack batterie.

Le pack batterie comprenant les dispositifs électriques 10 est par exemple destiné à être installé dans un véhicule automobile électrique ou hybride (non représenté).

Le dispositif électrique 10 définit une direction transversale Y, qui est par exemple la direction de déplacement du véhicule, et une direction longitudinale X perpendiculaire à la direction transversale Y et qui est par exemple la direction transversale du véhicule.

On définit en outre une direction d'élévation Z qui est perpendiculaire à la direction longitudinale X et à la direction transversale Y, et qui est par exemple destinée à être sensiblement verticale lorsque le véhicule se trouve sur une surface horizontale (non représentée).

Le dispositif électrique 10 comprend au moins un assemblage 12. Le dispositif électrique 10 comprend de préférence une pluralité d'assemblages 12 connectés électriquement et mécaniquement les uns aux autres.

Comme illustré sur la figure 1, l'assemblage 12 comprend un empilement 20 comportant une pluralité de cellules électrochimiques 22 et une pluralité de couches isolantes 24, et un boitier 26 définissant un logement dans lequel est reçu l'empilement 20.

L'empilement 20 comprend en outre des moyens intumescents 28 aptes à gonfler lorsqu'ils sont soumis à une température supérieure à une température de gonflement.

L'empilement 20 s'étend entre une première extrémité 13 et une deuxième extrémité 14 opposées l'une à l'autre selon la direction longitudinale X, et entre un premier côté 15 et un deuxième côté 16 opposés l'un à l'autre selon la direction transversale Y.

L'empilement 20 comporte une pluralité de cellules électrochimiques 22 et une pluralité de couches isolantes 24 disposées le long de la direction longitudinale X.

De préférence, l'empilement 20 comprend au moins deux, de préférence au moins trois, cellules électrochimiques 22.

Dans l'exemple illustré sur la figure 1, l'empilement 20 comprend huit cellules électrochimiques 22.

Chaque cellule électrochimique 22 présente typiquement deux faces longitudinales 29 et deux faces transversales 30.

Dans des conditions dites de fonctionnement normal, une cellule électrochimique 22 présente une température inférieure à 60°C.

En cas d'emballement thermique, la cellule électrochimique 22 est propre à présenter une température d'emballement comprise entre 200°C et 800°C, par exemple comprise entre 300°C et 600°C.

L'empilement 20 comprend en outre une pluralité de couches isolantes 24, chacune des couches isolantes 24 s'étendant perpendiculairement à la direction longitudinale X, c'est-à-dire selon la direction transversale Y, et étant disposée selon la direction longitudinale X entre deux cellules électrochimiques 22 adjacentes.

En particulier, l'empilement 20 est constitué d'une simple alternance de cellules électrochimiques 22 et de couches isolantes 24.

De préférence, les cellules électrochimiques 22 et les couches isolantes 24 sont disposées successivement les unes contre les autres selon la direction longitudinale X, de sorte qu'il n'y a pas d'espace mécanique entre ces éléments.

Les couches isolantes 24 sont alors en contact avec les faces longitudinales 29 des cellules électrochimiques 22.

De préférence, l'empilement 20 comprend au moins deux couches isolantes 24.

En particulier, l'empilement 20 comprend un nombre de couches isolantes 24 correspondant au nombre de cellules électrochimiques 22 moins un.

Dans l'exemple illustré sur la figure 1, l'empilement 20 comprend sept couches isolantes 24.

Chaque couche isolante 24 est par exemple choisie parmi une plaque, une mousse ou un gel d'un matériau isolant thermique.

Avantageusement, au moins une, de préférence chaque, couche isolantes 24 est réalisée en matériau intumescent, comme cela sera détaillé par la suite.

Dans les conditions de fonctionnement normal, l'empilement 20, et plus particulièrement les cellules électrochimiques 22, est propre à subir une augmentation de volume, due par exemple à une dilatation des cellules électrochimiques 22.

Par exemple, les cellules électrochimiques 22 sont propres à subir une variation de leur épaisseur, typiquement une augmentation de l'ordre de 3%, au cours de la vie de la cellule.

Typiquement, l'empilement 20 est propre à exercer une contrainte sur le boitier 26 de l'ordre de 1000 N à 5000 N en début de vie des cellules, et une contrainte de l'ordre de 20 000 N à 50 000 N en fin de vie des cellules.

Les moyens intumescents 28 sont disposés selon la direction longitudinale X entre deux cellules électrochimiques 22 adjacentes.

Avantageusement, l'empilement 20 comprend des moyens intumescents 28 disposés entre chaque paire de cellules adjacentes 22.

Selon le mode de réalisation représenté sur les figures 1 et 2, les moyens intumescents 28 comprennent au moins une des couches isolantes 24, de préférence l'ensemble des couches isolantes 24.

Les moyens intumescents 28 sont aptes à gonfler lorsqu'ils sont soumis à une température supérieure ou égale à une température de gonflement, notamment en cas d'emballement thermique d'une cellule électrochimique 22.

Les moyens intumescents 28 sont aptes à se dilater ou enfler de manière importante, par exemple de façon à doubler leur volume ou davantage, sous l'application de la température de gonflement pendant une durée de réaction typiquement comprise entre 10 s et 1 min.

En particulier, le volume des moyens intumescents 28 peut être multiplié par une valeur de l'ordre de 5 à 10. En d'autres termes, les moyens intumescents 28 sont aptes à gonfler d'un volume initial à un volume gonflé sous l'effet de la température de gonflement, le volume gonflé étant au moins trois fois, de préférence au moins cinq fois, supérieur au volume initial.

La température de gonflement est comprise entre 150 °C et 300 °C, par exemple sensiblement égale à 200 °C.

Par exemple, les moyens intumescents 28 sont réalisés en mousse d'élastomère comprenant des particules d'un agent thermiquement gonflable. En variante, les moyens intumescents 28 sont réalisés sous forme de plaque d'élastomère.

En gonflant, les moyens intumescents 28 sont configurés pour appliquer une contrainte sur le boitier 26, typiquement de l'ordre de 5 000 N à 20 000 N. De plus, en gonflant, les moyens intumescents 28 augmentent l'effet d'isolation thermique, réduisant la propagation de la chaleur entre les cellules électrochimiques 22. Le boitier 26 comprend deux plaques extrémales 32 et deux plaques latérales 34. Les plaques extrémales 32 et latérales 34 sont liées entre elles, par exemple par soudage ou vissage. Le boitier 26 présente une section transversale sensiblement rectangulaire selon un plan comprenant les directions longitudinale X et transversale Y.

Les plaques extrémales 32 s'étendent perpendiculairement à la direction longitudinale X et sont situées de part et d'autre de l'empilement 20 longitudinalement.

En particulier, chacune des deux plaques extrémales 32 s'appuie sur l'une des première et deuxième extrémités 13, 14 de l'empilement 20, et la recouvre de préférence entièrement.

Les plaques extrémales 32 sont par exemple réalisées en aluminium extrudé.

Les plaques extrémales 32 présentent de préférence une épaisseur e1 mesurée selon la direction longitudinale X comprise entre 10 mm et 30 mm.

Les plaques latérales 34 s'étendent parallèlement à la direction longitudinale X, perpendiculairement aux plaques extrémales 32, et sont situées de part et d'autre de l'empilement 20 selon la direction transversale Y.

Chacune des deux plaques latérales 34 s'appuie sur un premier ou un deuxième côté 15, 16 de l'empilement 20, et le recouvre au moins à 50%, de préférence entièrement.

Chacune des deux plaques latérales 34 présente une face interne 35 orientée vers l'empilement 20 et une face externe 36 opposée. Les faces internes 35 prennent appui sur les faces transversales 30 des cellules électrochimiques 22 de l'empilement 20.

Chaque plaque latérale 34 présente de préférence une épaisseur e2 comprise en 1 mm et 2mm.

Les plaques extrémales 32 et latérales 34 permettent un maintien mécanique serré de l'empilement 20. Par « maintien mécanique serré », on entend que l'empilement 20 est dépourvu de jeu selon la direction longitudinale X ou la direction transversale Y par rapport aux plaques 32, 34.

Selon un mode de réalisation particulier, les plaques extrémales 32 et/ou les plaques latérales 34 sont collées à l'empilement 20, de manière à assurer un maintien mécanique renforcé.

Le boitier 26 comprend une partie frangible 40. La partie frangible 40 est configurée pour se rompre sous l'effet d'une force donnée.

En particulier, la partie frangible 40 est configurée pour se rompre sous l'effet du gonflement des moyens intumescents 28.

Par « rompre », on entend l'apparition et la propagation d'une fissure à travers la partie frangible 40.

Dans le mode de réalisation représenté sur les figures 1 et 2, au moins une des plaques latérales 34 comprend une partie frangible 40.

De préférence, comme représenté sur les figures 1 et 2, chacune des plaques latérales 34 comporte une partie frangible 40. En d'autres termes, chacune des plaques latérales 34 est configurée pour se rompre sous l'effet du gonflement des moyens intumescents 28.

Chaque plaque latérale 34 est apte à être soumise à un effort dit d'exploitation compris en 5000N et 50000 N, notamment entre 5000 N et 15000 N, sans se déformer de manière permanente, lorsque ladite partie frangible 40 est soumise à une première température strictement inférieure à la température de gonflement, la première température étant inférieure à 100°C.

Chaque plaque latérale 34 présente ainsi une résistance à la traction supérieure à 100 MPa, de préférence supérieure à 150 MPa, lorsqu'elle est soumise à la première température.

Ainsi, dans les conditions de fonctionnement normal, chaque plaque latérale 34 est apte à supporter la pression exercée par l'empilement 20, sans se rompre.

Avantageusement, chaque plaque latérale 34 présente une moindre résistance à la traction et une moindre ténacité lorsque la température augmente au-delà d'une température seuil.

Chaque plaque latérale 34 présente une résistance à la traction comprise entre 50 et 100 MPa lorsqu'elle est soumise une deuxième température supérieure ou égale à 200°C.

En particulier, la deuxième température est sensiblement égale à la température de gonflement.

Chaque plaque latérale 34 présente donc des comportements différents en fonction de la température à laquelle elle est soumise. Dans les conditions de fonctionnement normal, la plaque latérale 34 est apte à résister aux variations de volumes de l'empilement 20, sans se rompre. En revanche, en cas d'emballement thermique d'une cellule électrochimique 22 et de gonflement des moyens intumescents 28, la plaque latérale 34 est configurée pour se rompre sous l'effet dudit gonflement.

En se rompant, la plaque latérale 34 évite la propagation de l'emballement thermique à d'autres cellules électrochimiques 22, en évitant notamment que la plaque latérale 34 ne joue le rôle de pont thermique entre les cellules électrochimiques 22.

Chaque plaque latérale 34 est réalisée en un matériau choisi parmi les alliages d'aluminium, de préférence parmi les alliages d'aluminium de type Al-Mn (séries 3000), Al-Mg (séries 5000) ou Al-Mg-Si (séries 6000).

Avantageusement, comme représenté sur la figure 2, chaque plaque latérale 34 présente au moins une zone de fragilisation, configurée pour initier la rupture frangible lors du gonflement des moyens intumescents 28.

Par exemple, la zone de fragilisation est une encoche 42 réalisée dans la plaque latérale 34.

De préférence, comme visible sur la figure 2, chaque plaque latérale 34 comprend une pluralité d'encoches 42 réalisée au niveau d'un bord longitudinale de la plaque latérale 34. Par exemple, chaque plaque latérale 34 comprend autant d'encoches 42 qu'il y a de cellules électrochimiques 22 de l'empilement 20, chaque encoche 42 étant disposée en vis-à-vis d'une cellule électrochimique 22.

Chaque encoche 42 présente typiquement une profondeur p, selon la direction d'élévation Z, comprise entre 3 mm et 10 mm.

Les encoches 42 sont configurées pour faciliter la rupture de la plaque latérale 34 lors du gonflement des moyens intumescents 28, sans augmenter le risque de rupture dans les conditions de fonctionnement normal.

Le comportement de l'assemblage 12 des figures 1 et 2 en cas d'emballement thermique d'une des cellules électrochimiques 22 va à présent être décrit.

Dans les conditions de fonctionnement normal, l'empilement 20, et plus particulièrement les cellules électrochimiques 22, est susceptible de présenter une augmentation de volume, due par exemple à une dilatation des cellules électrochimiques 22. Le boitier 26 est apte à supporter de telles variations et à résister à des pressions de l'ordre de 20 000 N à 50 000 N.

En cas d'emballement thermique d'une cellule électrochimique 22, la chaleur générée entraine une augmentation de la température.

Cette augmentation de la température a pour effet, au-delà d'une température seuil, d'entrainer une diminution de la résistance à la traction des parties frangibles 40, en particulier des plaques latérales 34.

Lorsque la température atteint ou dépasse la température de gonflement, les moyens intumescents 28 confrontés à ladite température se mettent à gonfler et, du fait de leur augmentation de volume, à exercer une pression croissante sur le boitier 26.

Cela a pour effet d'entrainer une rupture de plaques latérales, évitant une propagation de l'emballement thermique à d'autres cellules électrochimiques 22.

Avantageusement, les encoches 42 facilitent la rupture des plaques latérales 34 lors du gonflement des moyens intumescents 28.

L'assemblage 12 selon l'invention permet donc de prévenir efficacement l'emballement thermique dans le dispositif électrique 10. Il permet également de réduire les coûts de fabrication, en évitant d'avoir à utiliser des matériaux isolants thermiques coûteux dans les couches isolantes 24.

En variante ou en complément, les moyens intumescents 28 comprennent au moins une couche de revêtement recouvrant au moins en partie une face d'une cellule électrochimique 22. Par exemple, les deux faces longitudinales 29 de chaque cellule électrochimique 22 sont recouvertes au moins en partie d'une couche de revêtement, ladite couche étant réalisée en matériau intumescent.

Selon une variante, une seule face longitudinale 29 par cellule électrochimique 22 est recouverte par la couche de revêtement.

Par exemple, la couche de revêtement est réalisée en peinture acrylique comprenant des micro-particules d'un agent thermiquement expansible.

La couche de revêtement recouvre de préférence au moins 50%, de préférence intégralement, la face longitudinale 29 associée, par exemple sur une épaisseur comprise entre 50 µm et 200 µm.

En variante ou en complément, la partie frangible 40 est comprise par au moins une des plaques extrémales 32 du boitier 26 et/ou par un élément de fixation des plaques extrémales 32 avec les plaques latérales 34.

## Revendications

1. Assemblage (12) comprenant :
- un empilement (20) comportant une pluralité de cellules électrochimiques (22) disposées le long d'une direction longitudinale (X) et une pluralité de couches isolantes (24), chacune des couches isolantes (24) s'étendant perpendiculairement à la direction longitudinale (X) et étant disposée le long de la direction longitudinale (X) entre deux cellules électrochimiques (22) adjacentes, et
- un boitier (26) définissant un logement dans lequel est reçu l'empilement (20),
**caractérisé en ce que** l'empilement (20) comprend en outre des moyens intumescents (28) disposés selon la direction longitudinale (X) entre deux cellules électrochimiques (22) adjacentes, les moyens intumescents (28) étant aptes à gonfler lorsqu'ils sont soumis à une température supérieure à une température de gonflement, ladite température de gonflement étant comprise entre 150 °C et 300 °C,
le boitier (26) comprenant au moins une partie frangible (40) configurée pour se rompre sous l'effet du gonflement des moyens intumescents (28).

2. Assemblage (12) selon la revendication 1, dans lequel le boitier (26) comprend deux plaques extrémales (32), s'étendant perpendiculairement à la direction longitudinale (X) et situées de part et d'autre des cellules électrochimiques (22) longitudinalement, et deux plaques latérales (34) s'étendant perpendiculairement aux plaques extrémales (32) situées de part et d'autre des cellules électrochimiques (22) selon une direction transversale (Y), perpendiculaire à la direction longitudinale (X), la ou les partie(s) frangible(s) (40) étant formée(s) par au moins une des plaques latérales (34).

3. Assemblage (12) selon la revendication 2, dans lequel les plaques latérales (34) forment chacune une partie frangible (40).

4. Assemblage (12) selon la revendication 2 ou 3, dans lequel chaque plaque latérale (34) présente une face interne (35) orientée vers l'empilement (20) et une face externe (36) opposée, chaque plaque latérale (34) présentant une épaisseur (e2) comprise en 1 mm et 3 mm, l'épaisseur (e2) étant mesurée entre la face interne (35) et la face externe (36) de la plaque latérale (34).

5. Assemblage (12) selon l'une quelconque des revendications 1 à 4, dans lequel la ou chaque partie frangible (40) est apte à être soumise à une contrainte dite d'exploitation comprise en 5000 N et 50000 N sans se déformer de manière permanente, lorsque la partie frangible (40) est soumise à une première température strictement inférieure à la température de gonflement, la première température étant inférieure à 100°C.

6. Assemblage (12) selon la revendication 5, dans lequel la ou chaque partie frangible (40) présente une résistance à la traction supérieure à 100 MPa, de préférence supérieure à 150 MPa, lorsqu'elle est soumise à la première température.

7. Assemblage (12) selon l'une quelconque des revendications précédentes, dans lequel la ou chaque partie frangible (40) présente une résistance à la traction comprise entre 50 MPa et 100 MPa lorsqu'elle est soumise une deuxième température supérieure ou égale à la température de gonflement, la deuxième température étant supérieure ou égale à 200°C.

8. Assemblage (12) selon l'une quelconque des revendications précédentes, dans lequel la ou chaque partie frangible (40) est réalisée en un matériau choisi parmi les alliages d'aluminium, de préférence parmi les alliages d'aluminium de type Al-Mn, Al-Mg ou Al-Mg-Si.

9. Assemblage (12) selon l'une quelconque des revendications précédentes, dans lequel la ou chaque partie frangible (40) présente au moins une zone de fragilisation, de préférence une encoche (42), configurée pour initier la rupture de la partie frangible (40) lors du gonflement des moyens intumescents (28).

10. Assemblage (12) selon l'une quelconque des revendications précédentes, dans lequel les moyens intumescents (28) comprennent au moins une des couches isolantes (24), de préférence l'ensemble des couches isolantes (24).

11. Assemblage (12) selon l'une quelconque des revendications précédentes, dans lequel les moyens intumescents (28) comprennent au moins une couche de revêtement recouvrant au moins en partie une face longitudinale (29) d'une cellule électrochimique (22).

12. Assemblage (12) selon l'une quelconque des revendications précédentes, dans lequel les moyens intumescents (28) sont réalisés en élastomère, notamment en mousse élastomère, ou en un mélange polymérique comprenant des agents expansibles.

13. Assemblage (12) selon l'une quelconque des revendications précédentes, dans lequel les moyens intumescents (28) sont aptes à gonfler d'un volume initial à un volume gonflé sous l'effet de la température de gonflement, le volume gonflé étant au moins trois fois, de préférence au moins cinq fois, supérieur au volume initial.

14. Assemblage (12) selon l'une quelconque des revendications précédentes, comprenant des moyens intumescents (28) disposés entre chaque paire de cellules électrochimiques (22) adjacentes.

15. Dispositif électrique (10), tel qu'un module de batterie, une batterie ou un pack batterie, comprenant au moins un assemblage (12) selon l'une quelconque des revendications précédentes.

## Patentansprüche

1. Anordnung (12), umfassend:
- einen Stapel (20), der eine Vielzahl elektrochemischer Zellen (22) aufweist, die entlang einer Längsrichtung (X) angeordnet sind, und eine Vielzahl von Isolierschichten (24), wobei sich jede der Isolierschichten (24) senkrecht zur Längsrichtung (X) erstreckt und entlang der Längsrichtung (X) zwischen zwei benachbarten elektrochemischen Zellen (22) angeordnet ist, und
- ein Gehäuse (26), das eine Aufnahme definiert, in der der Stapel (20) aufgenommen ist,
**dadurch gekennzeichnet, dass** der Stapel (20) ferner intumeszierende Mittel (28) umfasst, die gemäß der Längsrichtung (X) zwischen zwei benachbarten elektrochemischen Zellen (22) angeordnet sind, wobei die intumeszierenden Mittel (28) geeignet sind, sich aufzublähen, wenn sie einer Temperatur ausgesetzt werden, die höher als eine Aufblähtemperatur ist, wobei die Aufblähtemperatur zwischen 150 °C und 300 °C liegt,
wobei das Gehäuse (26) mindestens einen zerbrechlichen Abschnitt (40) umfasst, der ausgelegt ist, um unter der Wirkung der Aufblähung der intumeszierenden Mittel (28) zu brechen.

2. Anordnung (12) nach Anspruch 1, wobei das Gehäuse (26) zwei Endplatten (32) umfasst, die sich senkrecht zur Längsrichtung (X) erstrecken und sich längs auf beiden Seiten der elektrochemischen Zellen (22) befinden, und zwei Seitenplatten (34), die sich senkrecht zu den Endplatten (32) erstrecken, die sich auf beiden Seiten der elektrochemischen Zellen (22) gemäß einer Querrichtung (Y) senkrecht zur Längsrichtung (X) befinden, wobei der oder die zerbrechlichen Teile (40) von mindestens einer der Seitenplatten (34) gebildet werden.

3. Anordnung (12) nach Anspruch 2, wobei die Seitenplatten (34) jeweils einen zerbrechlichen Teil (40) bilden.

4. Anordnung (12) nach Anspruch 2 oder 3, wobei jede Seitenplatte (34) eine dem Stapel (20) zugewandte Innenseite (35) und eine gegenüberliegende Außenseite (36) aufweist, wobei jede Seitenplatte (34) eine Dicke (e2) im Bereich von 1 mm bis 3 mm aufweist, wobei die Dicke (e2) zwischen der Innenseite (35) und der Außenseite (36) der Seitenplatte (34) gemessen wird.

5. Anordnung (12) nach einem der Ansprüche 1 bis 4, wobei der oder jeder zerbrechliche Teil (40) geeignet ist, einer als Betriebsbeanspruchung bezeichneten Beanspruchung zwischen 5000 N und 50000 N ausgesetzt zu werden, ohne sich dauerhaft zu verformen, wenn der zerbrechliche Teil (40) einer ersten Temperatur ausgesetzt wird, die strikt unter der Aufblähtemperatur liegt, wobei die erste Temperatur unter 100 °C liegt.

6. Anordnung (12) nach Anspruch 5, wobei der oder jeder zerbrechliche Teil (40) eine Zugfestigkeit von über 100 MPa, vorzugsweise über 150 MPa, aufweist, wenn er der ersten Temperatur ausgesetzt wird.

7. Anordnung (12) nach einem der vorhergehenden Ansprüche, wobei der oder jeder zerbrechliche Teil (40) eine Zugfestigkeit zwischen 50 MPa und 100 MPa aufweist, wenn er einer zweiten Temperatur ausgesetzt wird, die gleich oder höher als die Aufblähtemperatur ist, wobei die zweite Temperatur gleich oder höher als 200 °C ist.

8. Anordnung (12) nach einem der vorhergehenden Ansprüche, wobei der oder jeder zerbrechliche Teil (40) aus einem Material hergestellt ist, das aus Aluminiumlegierungen, vorzugsweise aus Aluminiumlegierungen des Typs Al-Mn, Al-Mg oder Al-Mg-Si, ausgewählt ist.

9. Anordnung (12) nach einem der vorhergehenden Ansprüche, wobei der oder jeder zerbrechliche Teil (40) mindestens eine Schwächungszone, vorzugsweise eine Kerbe (42), aufweist, die ausgelegt ist, um beim Aufblähen der intumeszierenden Mittel (28) den Bruch des zerbrechlichen Teils (40) einzuleiten.

10. Anordnung (12) nach einem der vorhergehenden Ansprüche, wobei die intumeszierenden Mittel (28) mindestens eine der Isolierschichten (24), vorzugsweise alle Isolierschichten (24), umfassen.

11. Anordnung (12) nach einem der vorhergehenden Ansprüche, wobei die intumeszierenden Mittel (28) mindestens eine Überzugsschicht umfassen, die eine Längsseite (29) einer elektrochemischen Zelle (22) mindestens teilweise bedeckt.

12. Anordnung (12) nach einem der vorhergehenden Ansprüche, wobei die intumeszierenden Mittel (28) aus Elastomer, insbesondere aus Elastomerschaum, oder aus einer Polymermischung, die ausdehnbare Mittel umfasst, hergestellt sind.

13. Anordnung (12) nach einem der vorhergehenden Ansprüche, wobei die intumeszierenden Mittel (28) geeignet sind, unter der Wirkung der Aufblähtemperatur von einem Ausgangsvolumen zu einem aufgeblähten Volumen aufzublähen, wobei das aufgeblähte Volumen mindestens dreimal, vorzugsweise mindestens fünfmal, größer als das Ausgangsvolumen ist.

14. Anordnung (12) nach einem der vorhergehenden Ansprüche, die intumeszierende Mittel (28) umfasst, die zwischen jedem Paar benachbarter elektrochemischer Zellen (22) angeordnet sind.

15. Elektrische Vorrichtung (10), wie ein Batteriemodul, eine Batterie oder ein Batteriepack, die mindestens eine Anordnung (12) nach einem der vorhergehenden Ansprüche umfasst.

## Claims

1. An assembly (12) comprising:
- a stack (20) consisting of a plurality of electrochemical cells (22) arranged along a longitudinal direction (X) and a plurality of insulating layers (24), each of the insulating layers (24) extending perpendicularly to the longitudinal direction (X) and being arranged along the longitudinal direction (X) between two adjacent electrochemical cells (22), and
- a casing (26) defining a housing in which the stack (20) is received,
**characterised in that** the stack (20) further comprises intumescent means (28) arranged in a longitudinal direction (X) between two adjacent electrochemical cells (22), the intumescent means (28) being capable of swelling when subjected to a temperature above a swelling temperature, said swelling temperature being between 150°C and 300°C,
the casing (26) comprising at least one frangible part (40) configured to break under the effect of the swelling of the intumescent means (28).

2. An assembly (12) according to claim 1, in which the casing (26) comprises two end plates (32), extending perpendicularly to the longitudinal direction (X) and located on either side of the electrochemical cells (22) longitudinally, and two side plates (34) extending perpendicularly to the end plates (32) located on either side of the electrochemical cells (22) in a transverse direction (Y) perpendicular to the longitudinal direction (X), the frangible part(s) (40) being formed by at least one of the side plates (34).

3. An assembly (12) according to claim 2, wherein the side plates (34) each form a frangible portion (40).

4. An assembly (12) according to claim 2 or 3, in which each side plate (34) has an inner face (35) facing the stack (20) and an opposite outer face (36), each side plate (34) having a thickness (e2) of between 1 mm and 3 mm, the thickness (e2) being measured between the inner face (35) and the outer face (36) of the side plate (34).

5. An assembly (12) according to any one of claims 1 to 4, in which the or each frangible part (40) is capable of being subjected to a so-called operating stress of between 5000 N and 50000 N without deforming permanently, when the frangible part (40) is subjected to a first temperature strictly lower than the swelling temperature, the first temperature being lower than 100°C.

6. An assembly (12) according to claim 5, wherein the or each frangible portion (40) has a tensile strength greater than 100 MPa, preferably greater than 150 MPa, when subjected to the first temperature.

7. An assembly (12) according to any one of the preceding claims, wherein the or each frangible part (40) has a tensile strength of between 50 MPa and 100 MPa when subjected to a second temperature greater than or equal to the swelling temperature, the second temperature being greater than or equal to 200°C.

8. An assembly (12) according to any one of the preceding claims, in which the or each frangible part (40) is made of a material chosen from aluminium alloys, preferably from aluminium alloys of the Al-Mn, Al-Mg or Al-Mg-Si type.

9. An assembly (12) according to any one of the preceding claims, in which the or each frangible part (40) has at least one embrittlement zone, preferably a notch (42), configured to initiate rupture of the frangible part (40) when the intumescent means (28) swell.

10. An assembly (12) according to any one of the preceding claims, wherein the intumescent means (28) comprise at least one of the insulating layers (24), preferably all of the insulating layers (24).

11. An assembly (12) according to any one of the preceding claims, in which the intumescent means (28) comprise at least one coating layer covering at least part of a longitudinal face (29) of an electrochemical cell (22).

12. Assembly (12) according to any one of the preceding claims, in which the intumescent means (28) are made of elastomer, in particular elastomer foam, or of a polymeric mixture comprising expanding agents.

13. Assembly (12) according to any one of the preceding claims, in which the intumescent means (28) are capable of swelling from an initial volume to a swollen volume under the effect of the swelling temperature, the swollen volume being at least three times, preferably at least five times, greater than the initial volume.

14. An assembly (12) according to any one of the preceding claims, comprising intumescent means (28) located between each pair of adjacent electrochemical cells (22).

15. An electrical device (10), such as a battery module, battery or battery pack, comprising at least one assembly (12) according to any one of the preceding claims.
